# EUROPÄISCHE PATENTSCHRIFT

(11) **EP 1 265 330 B1**
(45) Veröffentlichungstag und Bekanntmachung des Hinweises auf die Patenterteilung: **27.12.2006**
(21) Anmeldenummer: 02007896.0
(22) Anmeldetag: 09.04.2002
(51) Int. Cl.: H02G 3/04, H02G 3/30

(54) **Aufbodenkanal**
Floor raceway
Conduite sur le sol

(30) Priorität: 07.06.2001 DE 20109550 U
(43) Veröffentlichungstag der Anmeldung: 11.12.2002
(73) Patentinhaber: Tehalit GmbH, 67716 Heltersberg (DE)
(72) Erfinder: Schneckmann, Horst, 67705 Trippstadt (DE); Schmitt, Erwin, 67659 Kaiserslautern (DE)
(74) Vertreter: Patentanwälte Möll und Bitterich

(56) Entgegenhaltungen:
- EP-A- 0 462 329
- FI-B- 103 843

## Beschreibung

Die Erfindung betrifft Aufbodenkanäle gemäß dem Oberbegriff des Anspruchs 1.

Aufbodenkanäle sind in den unterschiedlichsten Ausführungsformen bekannt und handelsüblich. Sie bestehen aus einem Unterteil mit einem flachen Boden, auf das ein flach gewölbtes Oberteil lösbar aufgesetzt werden kann. Man vergleiche z.B. die US 4 258 515. Das Unterteil besitzt einen Hohlraum, in dem Kabel, Drähte und Leitungen untergebracht werden. Das Unterteil wird auf dem Fußboden befestigt, beispielsweise mit einem doppelseitig klebenden Klebeband oder auch mit Schrauben.

Zwecks Aufnahme von Drähten, Kabeln und Leitungen unterschiedlicher Größen und unterschiedlicher Anzahl gibt es diese Aufbodenkanäle in den unterschiedlichsten Breiten. Bei den breiteren Exemplaren sind Zwischenwände vorgesehen, die das Innere in Kammern unterteilen und die Stabilität erhöhen.

Nachteilig ist, dass Hersteller und Händler diese Aufbodenkanäle in den unterschiedlichen Breiten und Ausführungsformen herstellen, lagern und transportieren müssen. Das ist unbefriedigend.

Der vorliegenden Erfindung liegt daher die Aufgabe zugrunde, Aufbodenkanäle der eingangs genannten Art anzugeben, die eine große Anpassungsfähigkeit an den Bedarf mit geringem lagertechnischem Aufwand vereinigen.

Diese Aufgabe wird gelöst durch Aufbodenkanäle mit den Merkmalen des Anspruchs 1.

Dank der Herstellung der Aufbodenkanäle aus Modulen müssen Hersteller und Händler nur wenige Grundmodule produzieren und vorhalten. Der Anwender kann daraus Aufbodenkanäle zusammensetzen, die seinen aktuellen Bedarf befriedigen. Sollte sich im Laufe der Benutzung herausstellen, dass die Kapazität eines solchen Aufbodenkanals nicht mehr ausreicht, kann er durch Einfügen weiterer Module die Kapazität ohne großen Aufwand erhöhen.

Besondere Aufmerksamkeit wurde der sicheren und gleichzeitig lösbaren Befestigung der Kanaloberteile auf den Unterteilen gewidmet. Schließlich ist die sichere Befestigung der Oberteile für den Erfolg des Modulkonzeptes mit verantwortlich.

Gemäß einer Ausgestaltung der Erfindung besitzen die Halteleisten an den Oberteilen Vorsprünge, die einen Reibschluss bewirken.

Einen noch sichereren Halt der Kanaloberteile auf den Unterteilen erhält man, wenn die Halteleisten an den Kanaloberteilen und die Längsleisten an den Kanalunterteilen miteinander korrespondierende Vorsprünge, Rippen oder dergleichen besitzen, die einen Formschluss bewirken.

Vorteilhafterweise sind zwei der Module als Rampen ausgebildet. Im übrigen wird dann nur noch ein Modul mit einfach rechteckigem Querschnitt benötigt, welches beliebig oft angereiht werden kann. .

Anhand der Zeichnung soll die Erfindung in Form eines Ausführungsbeispiels näher erläutert werden. Es zeigen
Fig. 1 einen Querschnitt durch einen Aufbodenkanal und
Fig. 2 eine Vergrößerung aus Fig. 1 im Verbindungsbereich zweier Module.

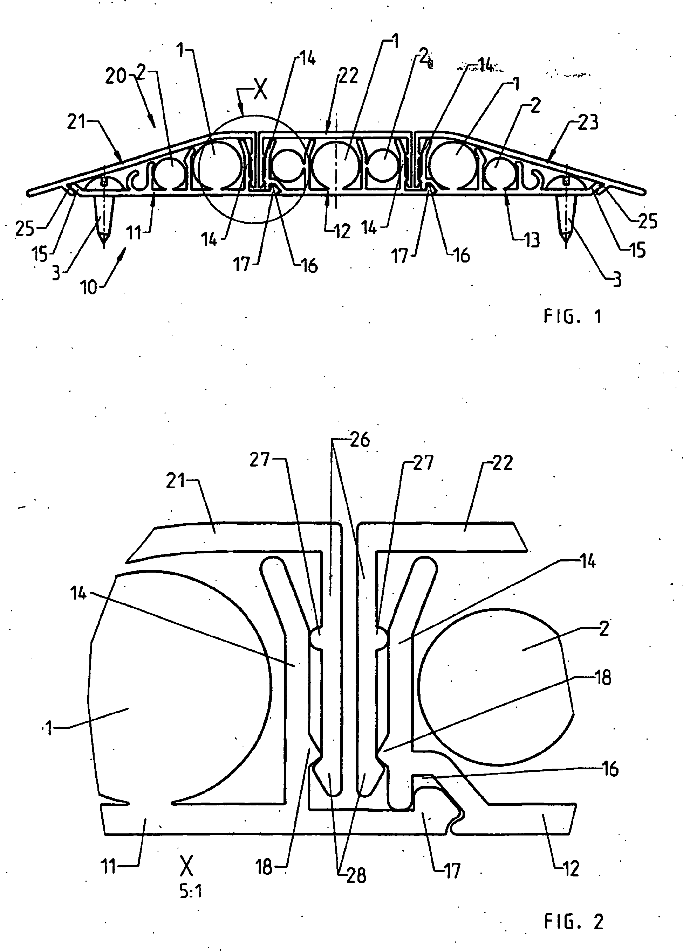

Fig. 1 zeigt einen Querschnitt durch einen aus drei Modulen zusammengesetzten, aus einem Unterteil 10 mit lösbar aufgesetztem Oberteil 20 bestehenden Aufbodenkanal. Vorgesehen sind drei Module 11, 21; 12, 22; 13, 23. Die beiden äußeren Module 11, 21; 13, 23 sind als Rampe ausgebildet. Das mittlere Modul 12, 22 besitzt einen rechteckigen Querschnitt.

Jedes Modul 11, 21; 12, 22; 13, 23 ist für die Aufnahme von Drähten oder Leitungen 1, 2 ausgebildet. Durch eine größere Anzahl von mittleren Modulen 12, 22 kann die Leitungsführungskapazität des Aufbodenkanals bedarfsweise vergrößert werden.

Im vorliegenden Ausführungsbeispiel wurden die beiden äußersten Rampenmodule 11, 21; 13, 23 mit Hilfe von Schrauben 3 auf dem Fußboden (nicht dargestellt) befestigt. Alternativ ist auch eine Befestigung mit doppelseitigem Klebeband möglich.

Fig. 2 zeigt eine Vergrößerung aus Fig. 1 im Verbindungsbereich der beiden linken Module 11, 21; 12, 22. Das Unterteil 11 besitzt an seiner Längskante eine Feder 17, die in eine Nut 16 am Unterteil 12 des Nachbarmoduls einrastet. Diese Nut-Feder-Verbindung 16, 17 ist so ausgebildet, dass sie unlösbar ist, solange die Unterteile 11, 12 auf dem Fußboden befestigt sind.

An ihren einander benachbarten Seitenkanten besitzen die Unterteile 11, 12 parallele und gegenseitig beabstandete Längswände 14. Zwischen diese Längswände 14 werden an' den Oberteilen 21, 22 angeformte Halteleisten 26 eingesteckt. Um einen sicheren Halt zu gewährleisten, sind die Halteleisten 26 mit Vorsprüngen 27 versehen, die einen erhöhten Reibschluss zu den Längswänden 14 bewirken. Zusätzlich sind sowohl an den Längswänden 14 als auch an den Halteleisten 26 keilförmige Vorsprünge 18, 28 angeformt, die einen zusätzlichen Formschluss zwischen den Längswänden 14 und den Halteleisten 26 bewirken.

## Patentansprüche

1. Aufbodenkanal, umfassend
- ein Unterteil (10)
- zum Verlegen auf dem Boden,
- mit Längswänden (14)
- und seitlichen Halteprofilen (15),
- und ein Oberteil (20)
- mit seitlichen Halteprofilen (25)
- zum lösbaren Verbinden mit dem Unterteil (10)
**gekennzeichnet durch** die Merkmale:
- das Unterteil (10) besteht aus wenigstens zwei Modulen (11, 12, 13),
- die Unterteilmodule (11, 12, 13) besitzen an ihren einander zugewandten Längskanten Verbindungselemente in Form von Nut (16) und Feder (17),
- das Oberteil (20) besteht aus wenigstens zwei Modulen (21, 22, 23),
- die Oberteilmodule (21, 22, 23) besitzen an ihren einander zugewandten Längsseiten Halteleisten (26),
- an ihren einander benachbarten Seitenkanten besitzen die Unterteilmodule (11, 12) parallele und gegenseitig beabstandete Längswände (14),
- zwischen diese Längswände (14) sind die an den Oberteilmodulen (21, 22, 23) angeformten Halteleisten (26) eingesteckt.

2. Aufbodenkanal nach Anspruch 1, **gekennzeichnet durch** das Merkmal:
- die Halteleisten (26) besitzen Vorsprünge (27), die einen Reibschluss bewirken.

3. Aufbodenkanal nach Anspruch 1 oder 2, **gekennzeichnet durch** das Merkmal:
- die Halteleisten (26) und die Längswände (14) besitzen Vorsprünge (18, 28), die einen Formschluss bewirken.

4. Aufbodenkanal nach Anspruch 1, 2 oder 3, **gekennzeichnet durch** das Merkmal:
- zwei Module (11, 13; 21, 23) sind als Rampen ausgebildet.

## Claims

1. On-floor trunking, comprising
- a lower part (10)
- for laying on the floor,
- with longitudinal walls (14)
- and lateral retaining profiles (15),
- and an upper part (20)
- with lateral retaining profiles (25)
- for releasable connection to the lower part (10),
**characterised by** the features:
- the lower part (10) consists of at least two modules (11, 12, 13),
- at their mutually facing longitudinal edges the lower part modules (11, 12, 13) have connecting elements in the form of a groove (16) and a tongue (17),
- the upper part (20) consists of at least two modules (21, 22, 23),
- at their mutually facing longitudinal sides the upper part modules (21, 22, 23) have retaining strips (26),
- at their adjacent side edges the lower modules(11, 12) have parallel longitudinal walls (14) which are spaced apart,
- the retaining strips (26) formed on the upper part modules (21, 22, 23) are inserted between these longitudinal walls (14).

2. On-floor trunking according to Claim 1, **characterised by** the feature:
- the retaining strips (26) have projections (27) which effect a frictional engagement.

3. On-floor trunking according to Claim 1 or 2, **characterised by** the feature:
- the retaining strips (26) and the longitudinal walls (14) have projections (18, 28) which effect a positive engagement.

4. On-floor trunking according to Claim 1, 2 or 3, **characterised by** the feature:
- two modules (11, 13; 21, 23) are formed as ramps.

## Revendications

1. Passage de plancher, comprenant :
- une partie inférieure (10)
- à poser sur le sol,
- avec des parois longitudinales (14)
- et des profilés de maintien latéraux (15),
- et une partie supérieure (20)
- avec des profilés de maintien latéraux (25)
- à assembler de manière amovible à la partie inférieure (10)
**caractérisé par** les caractéristiques suivantes : .
- la partie inférieure (10) est constituée d'au moins deux modules (11, 12, 13),
- les modules de partie inférieure (11, 12, 13) possèdent sur leurs bords longitudinaux en vis-à-vis des éléments d'assemblage en forme de rainure (16) et de languette (17),
- la partie supérieure (20) est constituée d'au moins deux modules (21, 22, 23),
- les modules de partie supérieure (21, 22, 23) possèdent sur leurs côtés longitudinaux en vis-à-vis des barrettes de maintien (26),
- les modules de partie inférieure (11, 12) possèdent sur leurs bords latéraux mutuellement voisins des parois longitudinales (14) parallèles et mutuellement distantes,
- les barrettes de maintien (26) formées sur les modules de partie supérieure (21, 22, 23) sont emboîtées entre ces parois longitudinales (14).

2. Passage de plancher selon la revendication 1, **caractérisé par** la caractéristique suivante :
- les barrettes de maintien (26) possèdent des saillies (27) qui produisent un engagement par friction.

3. Passage de plancher selon la revendication 1 ou 2, **caractérisé par** la caractéristique suivante :
- les barrettes de maintien (26) et les parois longitudinales (14) possèdent des saillies (18, 28) qui produisent un engagement positif.

4. Passage de plancher selon la revendication 1, 2 ou 3, **caractérisé par** la caractéristique suivante :
- deux modules (11, 13 ; 21, 23) sont réalisés en forme de rampes.
